(19) **Europäisches Patentamt / European Patent Office / Office européen des brevets**

(11) **EP 4 715 418 A1**

(12) **EUROPEAN PATENT APPLICATION**
published in accordance with Art. 153(4) EPC

(43) Date of publication:
**25.03.2026   Bulletin 2026/13**

(21) Application number: **24807294.4**

(22) Date of filing: **17.05.2024**

(51) International Patent Classification (IPC):
**G01S 5/14** $^{(2006.01)}$     **G01S 5/04** $^{(2006.01)}$

(52) Cooperative Patent Classification (CPC):
**G01S 5/04; G01S 5/14**

(86) International application number:
**PCT/JP2024/018408**

(87) International publication number:
**WO 2024/237344 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **18.05.2023   JP 2023082473**

(71) Applicant: **Sonas, Inc.**
**Bunkyo-ku**
**Tokyo 113-0033 (JP)**

(72) Inventors:
• **SUZUKI, Makoto**
  **Tokyo 113-0033 (JP)**
• **OHARA, Sotaro**
  **Tokyo 113-0033 (JP)**

(74) Representative: **Mathys & Squire**
**The Shard**
**32 London Bridge Street**
**London SE1 9SG (GB)**

(54) **POSITIONING SYSTEM**

(57)   A positioning system comprises one or more anchor nodes and one or more tag nodes, wherein the one or more anchor nodes are configured to: perform time synchronization among the one or more anchor nodes through first communication different from single-hop communication, and share parameters to be used in positioning processing of the tag nodes; transmit the parameters to the one or more tag nodes through single-hop communication; and execute positioning or rangefinding for the one or more tag nodes based on the parameters in a positioning slot in which the positioning processing is executed, and the one or more tag nodes are configured to: perform time synchronization with the one or more anchor nodes through the single-hop communication, and receive the parameters from at least one of the one or more anchor nodes; and execute wireless positioning processing using the single-hop communication with the at least one of the one or more anchor nodes based on the parameters in the positioning slot.

FIG. 4

EP 4 715 418 A1

**Description**

TECHNICAL FIELD

The present invention relates to a positioning system that performs wireless positioning of tag nodes.

BACKGROUND ART

In positioning systems where an anchor node, which is a reference node that provides a reference position, estimates the position of a target tag node, methods such as TDoA (Time Difference of Arrival), AoA (Angle of Arrival), and ToF (Time of Flight) are used. In TDoA, the position of the tag node is estimated from the difference in arrival times of packets received from the tag node by a plurality of anchor nodes which are synchronized. Highly-precise time synchronization between the anchor nodes is required to accurately identify the differences in arrival times, and there is thus a problem in that wired connections are necessary for the anchor nodes, which makes installation costs high. In AoA, the arrival direction of a radio wave is estimated by detecting the phase difference among signals received from the tag node by a plurality of antennas provided in a single anchor node. With AoA, highly-precise time synchronization is not required; however, there is a problem in that because a plurality of antennas are required, the unit size tends to increase, making it difficult to adjust the angle during installation. With ToF, highly-accurate position estimation can be achieved without requiring highly-precise time synchronization, but there is a problem in that the number of messages increases, and the frequency of positioning and the number of positioning target tags are limited (Non-Patent Literature (NPL) 1). These methods therefore have advantages and disadvantages such as those described above, and are sometimes used in combination.

CITATION LIST

PATENT LITERATURE

NPL 1: Milad Heydariaan, Hossein Dabirian, Omprakash Gnawali, "AnguLoc: Concurrent Angle of Arrival Estimation for Indoor Localization with UWB Radios," International Conference on Distributed Computing in Sensor Systems, 2020.

SUMMARY OF INVENTION

TECHNICAL PROBLEM

The frequency of positioning and the number of positioning tags are issues which are common among positioning systems. In particular, with ToF, distances are estimated by transmitting/receiving signals between one anchor node and one tag node, and it is therefore necessary to schedule when to transmit/receive signals for each combination of anchor node and tag node. Poor convenience in the scheduling of wireless positioning of tag nodes has therefore been a problem.

Having been conceived in light of the above-described problems, an object of the present invention is to provide a technique that improves the convenience of a positioning system that performs wireless positioning of a tag node.

SOLUTION TO PROBLEM

To achieve the above object, a positioning system comprising one or more anchor nodes and one or more tag nodes,

wherein the one or more anchor nodes are configured to:

perform time synchronization among the one or more anchor nodes through first communication different from single-hop communication, and share parameters to be used in positioning processing of the tag nodes;
transmit the parameters to the one or more tag nodes through single-hop communication; and
execute positioning or rangefinding for the one or more tag nodes based on the parameters in a positioning slot in which the positioning processing is executed, and

the one or more tag nodes are configured to:

perform time synchronization with the one or more anchor nodes through the single-hop communication, and receive the parameters from at least one of the one or more anchor nodes; and
execute wireless positioning processing using the single-hop communication with the at least one of the one or more anchor nodes based on the parameters in the positioning slot.

ADVANTAGEOUS EFFECTS OF INVENTION

According to the present invention, a technique that improves the convenience of a positioning system that performs wireless positioning of a tag node can be provided.

Other features and advantages of the present invention will be apparent from the following description taken in conjunction with the accompanying drawings. Note that the same reference numerals denote the same or like components throughout the accompanying drawings.

BRIEF DESCRIPTION OF DRAWINGS

FIG. 1 is a diagram illustrating an example of the configuration of a wireless communication system according to an embodiment.

FIG. 2 is a schematic diagram illustrating the hardware configuration of an anchor node according to an embodiment.

FIG. 3 is a schematic diagram illustrating the hardware configuration of a tag node according to an embodiment.

FIG. 4 is an example of a schedule of a wireless communication system according to an embodiment.

FIG. 5 is a sequence chart illustrating first positioning processing.

FIG. 6 is a sequence chart illustrating first positioning processing.

FIG. 7A is a flowchart illustrating processing executed by an anchor node according to an embodiment.

FIG. 7B is a flowchart illustrating processing executed by an anchor node according to an embodiment.

FIG. 8A is a flowchart illustrating processing executed by a tag node according to an embodiment.

FIG. 8B is a flowchart illustrating processing executed by a tag node according to an embodiment.

FIG. 9 is a sequence chart illustrating second positioning processing.

FIG. 10 is a sequence chart illustrating a variation on the second positioning processing.

FIG. 11 is a sequence chart illustrating a variation on the second positioning processing.

FIG. 12 is a sequence chart illustrating third positioning processing.

FIG. 13 is a sequence chart illustrating TWR (Two Way Ranging).

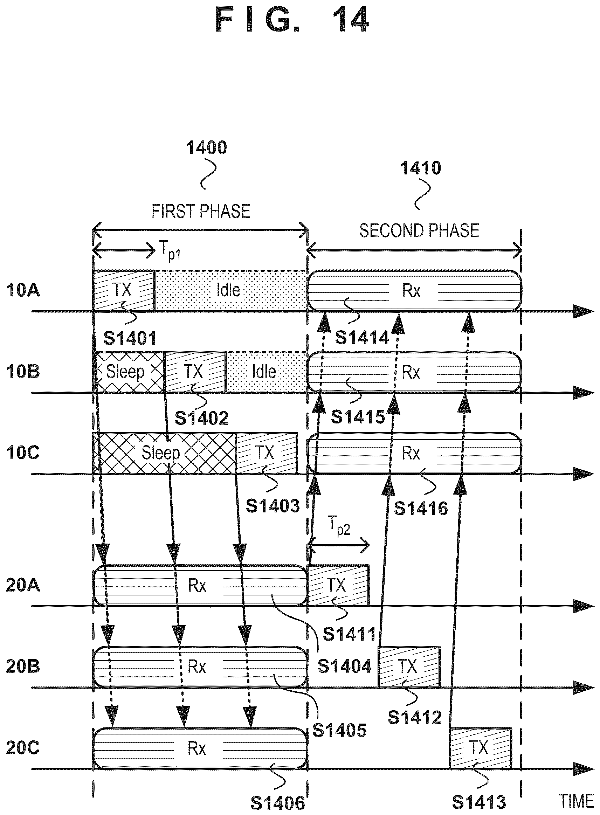

FIG. 14 is a sequence chart illustrating an example of positioning processing using AoA.

DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

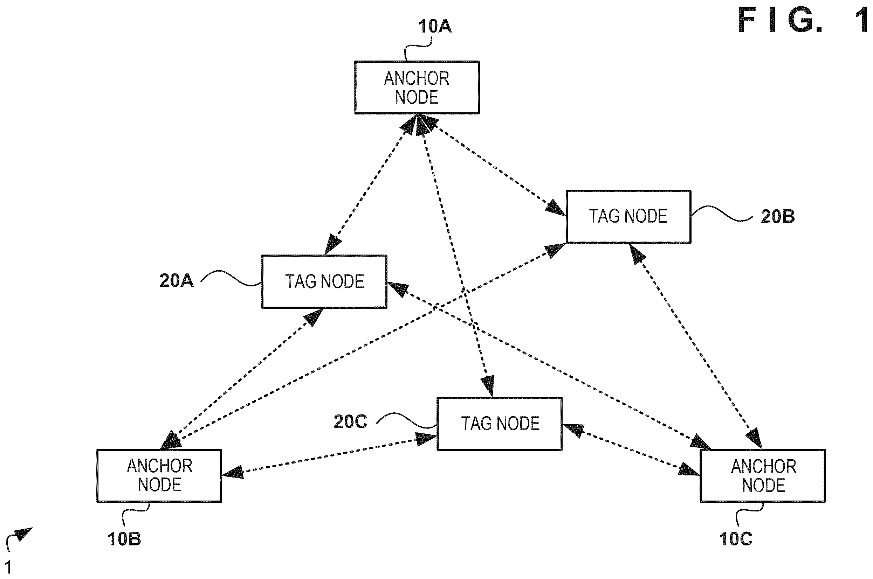

FIG. 1 illustrates a wireless communication system 1 (which may be referred to as a "positioning system 1" hereinafter) according to the present embodiment.

The positioning system 1 includes one or more anchor nodes 10 and one or more tag nodes 20, and performs positioning or rangefinding for a tag node 20 by measuring the distance between the anchor node 10 and the tag node 20 on the basis of signals transmitted/received between the anchor node 10 and the tag node 20. Anchor nodes 10A to 10C (which may be referred to as "anchor nodes 10" when there is no need to distinguish therebetween) and tag nodes 20A to 20C (which may be referred to as "tag nodes 20" when there is no need to distinguish therebetween) are illustrated in the example in FIG. 1. The anchor node 10 is a communication device for which the position is known before positioning processing (described later) is performed in the positioning system 1. The tag node 20 is a communication device for which the position is not known before the positioning processing (described later) is performed in the positioning system 1, and is a communication device to be positioned through the positioning processing. The positioning system 1 according to the present embodiment will be described as performing positioning that is based on TWR (Two-Way Ranging), which is a ToF (Time of Flight) method. In TWR, the distance between one anchor node 10 and one tag node 20 is specified, and the position of the tag node 20 is determined by aggregating the distances between a plurality of different anchor nodes 10 and the tag node 20. Accordingly, the positioning system 1 according to the present embodiment can include a plurality of, e.g., three or more, anchor nodes 10.

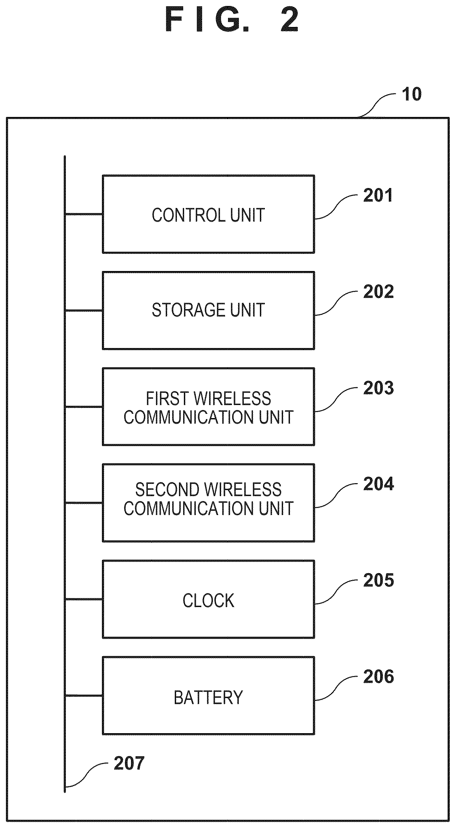

The hardware configuration of the anchor node 10 will be described with reference to FIG. 2. The anchor node 10 includes a control unit 201, a storage unit 202, a first wireless communication unit 203, a second wireless communication unit 204, a clock 205, and a battery 206. These constituent elements are connected by a bus 207.

The control unit 201 includes one or more processors and one or more memories, and controls the operations of the anchor node 10 as a whole by executing programs stored in the storage unit 202. The storage unit 202 is a storage device that stores the programs executed by the control unit 201, variables used by the programs, and the like. Position information of the anchor node 10 is also stored in the storage unit 202.

The first wireless communication unit 203 includes a wireless communication circuit for executing positioning processing (described later) through communication with the tag node 20. The second wireless communication unit 204 includes a wireless communication circuit for communication between the anchor nodes 10, for the anchor node 10 to connect to a wide-area wireless network such as a cellular network, and the like. In the present embodiment, the first wireless communication unit 203 includes a wireless communication circuit that performs single-hop communication compliant with the UWB (Ultra Wide Band) standard, and the second wireless communication unit 204 includes a wireless communication circuit that executes multi-hop communication according to a flooding method (described later). In one example, the first wireless communication unit 203 may alternatively or additionally include a wireless communication circuit compliant with a predetermined LPWA (Low Power Wide Area) standard, such as LTE-M (Long Term Evolution for machine-type-communication), LoRaWAN (Long Range Wide Area Network), or the like.

The clock 205 includes an oscillation circuit that supplies a clock used in the operations by the anchor node 10. The clock 205 in the present embodiment includes a first clock for the control unit 201 to operate, and a second clock that is used in the positioning processing and has a higher oscillation frequency than the first clock. The battery 206 is a power supply unit that supplies power used in the operations by the anchor node 10. Note that when the anchor node 10 is provided in a fixed manner, an external power supply such as an AC power supply may be used as the power supply unit.

Note that in one example, the anchor node 10 may include a positioning sensor (not shown) such as a Global Positioning System (GPS) sensor, and the position of the anchor node 10 (a reference position) determined on the basis of the output of the positioning sensor may be stored in the storage unit 202.

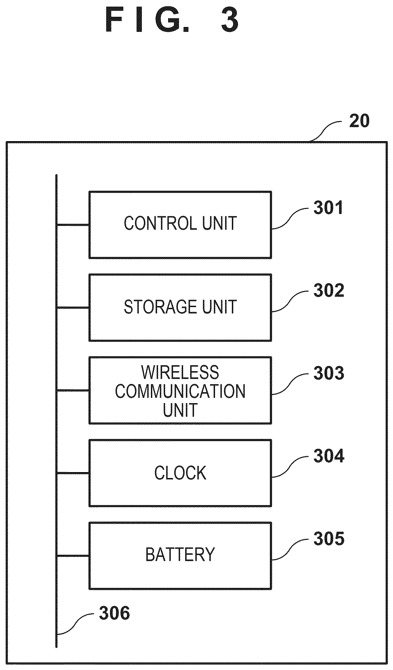

The hardware configuration of the tag node 20 will be described with reference to FIG. 3. The tag node 20 includes a control unit 301, a storage unit 302, a wireless communication unit 303, a clock 304, and a battery 305.

The control unit 301 includes one or more processors and one or more memories, and controls the operations of the tag node 20 as a whole by executing programs stored in the storage unit 302. The storage unit 302 is a storage device that stores the programs executed by the control unit 301, variables used by the programs, and the like.

The wireless communication unit 303 includes a wireless communication circuit for executing positioning processing (described later) through communication with the anchor node 10. In the present embodiment, the wireless communication unit 303 includes a wireless communication circuit that performs single-hop communication compliant with a UWB (Ultra Wide Band) standard.

The clock 304 includes an oscillation circuit that supplies a clock used in the operations by the tag node 20. Like the clock 205, the clock 304 in the present embodiment includes a first clock for the control unit 301 to operate, as well as a second clock that is used in the positioning processing and has a higher oscillation frequency than the first clock. The battery 305 is a power supply unit that supplies power used in the operations by the tag node 20.

In the present embodiment, the tag node 20 differs from the anchor node 10 in that the tag node 20 includes only the wireless communication unit 303, but the tag node 20 may also include a plurality of wireless communication circuits.

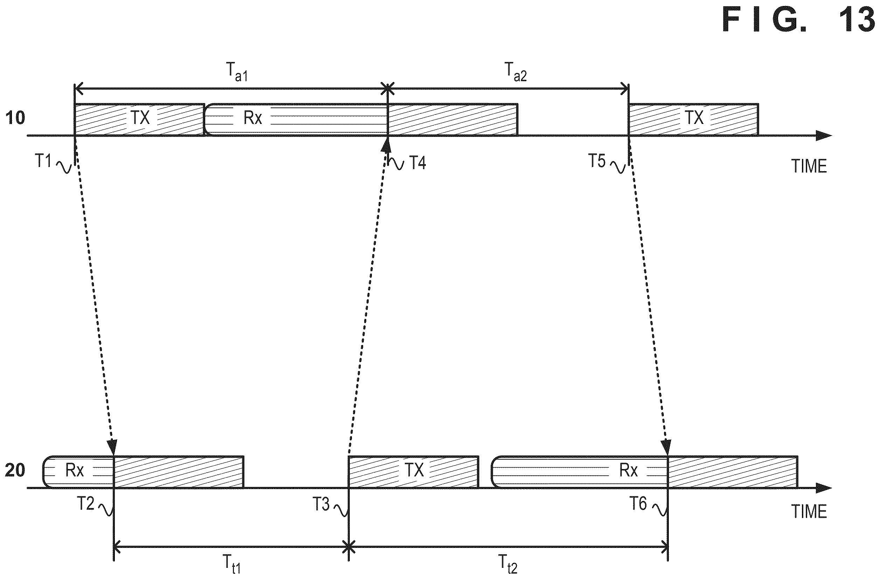

The principle of Two-Way Ranging (TWR), which is a positioning method performed through wireless communication, will be described next with reference to FIG. 13.

In TWR, a propagation time is specified on the basis of the difference between the transmission time and the reception time of packets transmitted/received between two nodes, and the distance between the two nodes is specified on the basis of the specified propagation time.

First, the anchor node 10 starts transmitting a packet at a predetermined timing T1 at which the tag node 20 is standing by for the packet. The anchor node 10 stores the transmission timing T1 of the packet. The packet transmitted from the anchor node 10 is received by the tag node 20 at a time T2 after a delay time including propagation delay. The tag node 20 stores the reception timing T2.

Next, the tag node 20 starts transmitting a packet at a predetermined timing T3 at which the anchor node 10 is standing by for the packet. The packet transmitted from the tag node 20 is received by the anchor node 10 at a time T4 after a delay time including propagation delay. Here, the tag node 20 stores a time difference $T_{t1}$ from the reception timing T2 to the transmission timing T3. The anchor node 10 stores a time $T_{a1}$ from the transmission timing T1 to the reception timing T4.

Next, the anchor node 10 starts transmitting a packet at a predetermined timing T5 at which the tag node 20 is standing by for the packet. The anchor node 10 stores a time $T_{a2}$ from the reception timing T4 to the transmission timing T5. The packet transmitted from the anchor node 10 is received by the tag node 20 at a time T6 after a delay time including propagation delay. The anchor node 10 stores a time $T_{t2}$ from the transmission timing T3 to the transmission timing T6.

Next, the tag node 20 transmits $T_{t1}$ and $T_{t2}$ to the anchor node 10. The anchor node 10 calculates the propagation delay by substituting the received $T_{t1}$ and $T_{t2}$ in the following formula using the stored $T_{a1}$ and $T_{a2}$.

$$T_{TOF} = \frac{T_{a1}T_{t2} - T_{a2}T_{t1}}{T_{a1} + T_{a2} + T_{t1} + T_{t2}}$$

The distance between the anchor node 10 and the tag node 20 can be estimated by multiplying the calculated $T_{TOF}$ by the propagation speed of the wireless signal, e.g., $3.0 \times 10^8$ m/s.

Note that times T1, T4, and T5 are times measured by the anchor node 10, and times T2, T3, and T6 are times measured by the tag node 20. Although there may be clock deviation between the anchor node 10 and the tag node 20, TWR makes it possible to compensate for the effect of individual differences among the clocks. Note that in the TWR (Two-Way Ranging) illustrated in FIG. 13, the roles of the anchor node 10 and the tag node 20 can be reversed.

According to the TWR described above, the distance between two nodes can be estimated. However, to estimate the distance and determine the position, it is necessary to determine the combination of the tag node 20 and the anchor node 10 that transmit/receive the packet as well as the packet transmission/reception timings, and it has therefore been difficult to determine which combination to use for the positioning processing when a large number of combinations of tag nodes 20 and anchor nodes 10 are present.

Accordingly, the present embodiment will describe a method for scheduling positioning processing for measuring the tag node 20 even when many combinations of tag nodes 20 and anchor nodes 10 are present.

<Example of Scheduling in Positioning System>

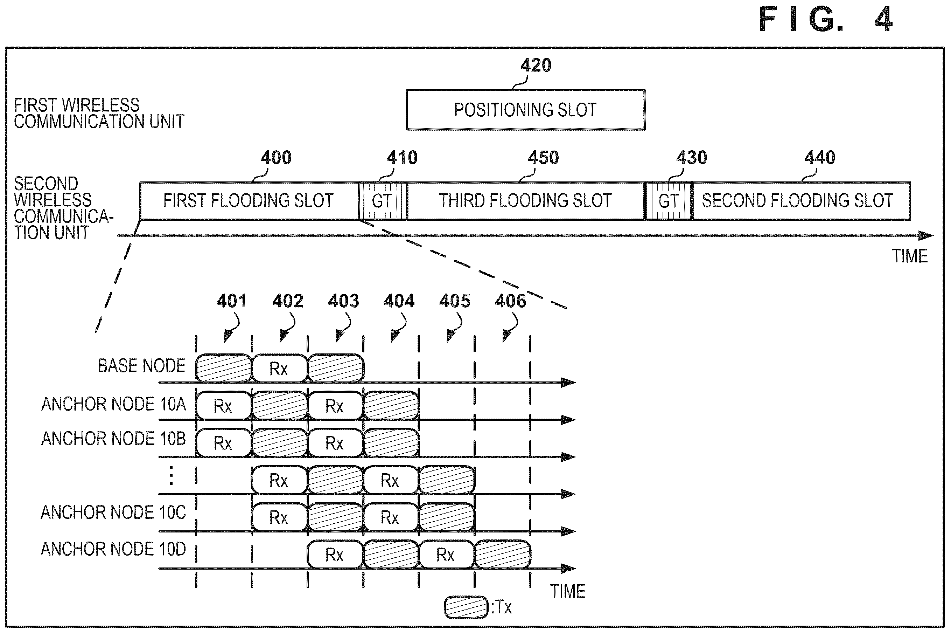

FIG. 4 illustrates an example of scheduling of the positioning system according to the present embodiment. The positioning system 1 repeats a positioning slot 420, which is a period of time for performing the positioning processing illustrated in FIG. 4 in a predetermined time period. This positioning processing is started according to the reception timing of a predetermined signal, e.g., a pulse signal every second.

The positioning slot 420 indicates a period in which a signal is transmitted/received through a first wireless communication unit, and periods 400, 440, and 450 are flooding slots, which are periods in which a signal is transmitted/received through a second wireless communication unit. In the following descriptions, the period 400 may be referred to as a first flooding slot 400, and the period 440 may be referred to as a second flooding slot 440. In addition, guard times (GTs) 410 and 430 are provided between the flooding slots to prevent interference between the flooding slots. The present embodiment will describe the first wireless communication unit as executing the positioning processing through communication using a frequency band different from that of the second wireless communication unit. However, the first wireless communication unit may execute the positioning processing through communication using the same frequency band as the second wireless communication unit. In this case, preventing signals from being transmitted/received in the third flooding slot 450 makes it possible to prevent interference between the wireless signal transmitted/received through the first wireless communication unit and the wireless signal transmitted/received through the second wireless communication unit. In other words, the third flooding slot 450 may be a guard time.

Note that the length of the positioning slot 420 and one flooding slot need not be the same length. For example, the positioning slot 420 may correspond to the length of a plurality of flooding slots. Additionally, the start time of the positioning slot 420 need not coincide with the start time of a flooding slot, and the start time of the positioning processing may be set such that the positioning slot 420 starts during the guard time 410, for example.

In the first flooding slot 400, the anchor node 10 shares the parameters used in the positioning processing among the anchors through communication by the second wireless communication unit 204, using the flooding method. The parameters used in the positioning processing include: a time length $T_{p1}$ of a beacon packet for synchronization transmitted in a first phase (described later); a time length $T_{p2}$ of a beacon packet used as a positioning probe transmitted in a second phase; a time length $T_{p3}$ of a beacon packet used as a positioning probe transmitted in a third phase; a time length $T_{p4}$ of a data packet including a positioning result transmitted in a fourth phase; the guard time; a maximum number of tag nodes 20 that transmit a beacon packet in the second phase ($N_T$); and a maximum number of anchor nodes 10 that transmit a beacon packet in the first phase ($N_A$). In one example, the parameters include information enabling each anchor node 10 to identify an order (k) in which the packets are transmitted in the positioning processing. A method for determining scheduling using these parameters will be described later. Note that the parameters $T_{p1}$ to $T_{p4}$ may include a guard time to prevent interference between packets.

For example, an anchor node 10 operating as a base node for managing the positioning parameters, or another communication device capable of communicating using the flooding method (referred to as a base node in the following descriptions), transmits a packet including the parameters described above in a subslot 401. The packet transmitted by the base node is, for example, a packet for time synchronization of the nodes in the flooding network, a packet communicating parameters used in the positioning processing, such as the number of anchors, and the like.

Having received the packet from the base node, the anchor nodes 10A and 10B forward the packet received in a subsequent subslot 402. Next, having received the packet in the subslot 402, the anchor node 10C forwards the received packet in the next subslot 403. By repeating this, the parameters used in the positioning processing can be shared among the anchor nodes 10 of the positioning system 1. In addition, clock synchronization (time synchronization) can be performed among the anchor nodes 10. Note that the accuracy of the clock synchronization among the anchor nodes 10 is about 0.1 microsecond to 1 millisecond, and the synchronization accuracy is such that the subslot timings can be matched. As such, TWR, which is one of the ToF methods that does not require highly-accurate synchronization, is used in the positioning processing (described later).

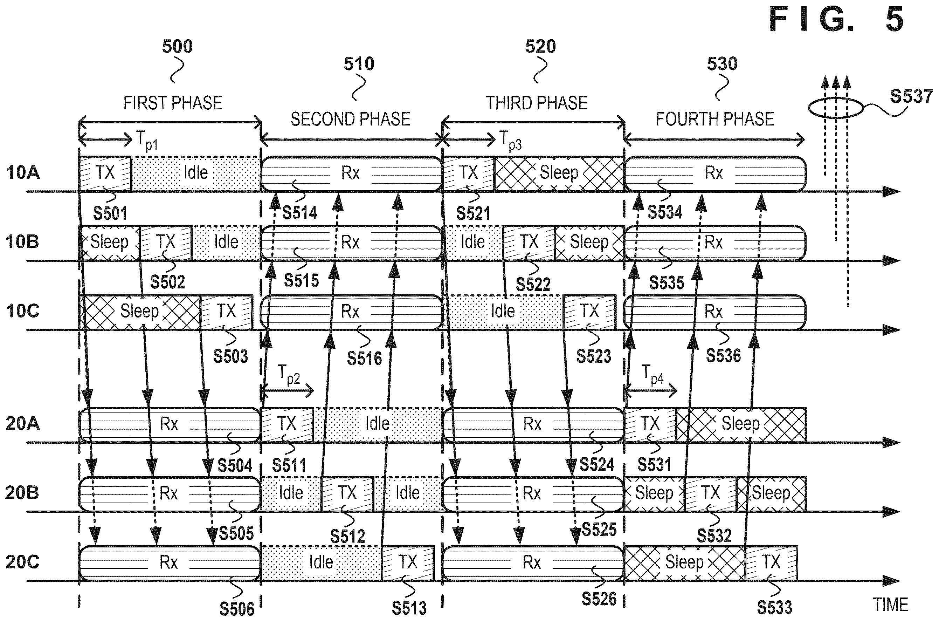

Next, the positioning processing for the tag node 20 is executed in the positioning slot 420 while communication pertaining to the third flooding slot 450 is being performed after the guard time (GT) 410. The positioning slot 420 will be described in detail later with reference to FIGS. 5 to 11. The positioning slot 420 may be started in response to a time synchronization packet transmitted in the third flooding slot 450, for example. Note that the communication using the flooding method for avoiding interference between the communication using the flooding method and the single-hop communication need not be performed during a period that overlaps with the positioning slot 420, i.e., during the third flooding slot 450.

Next, positioning results are collected at the base node in the flooding slot after the second flooding slot 440, which is the flooding slot after the positioning slot 420. Here, the positioning result may be time difference information through which the propagation delay between the tag node 20 and the anchor node 10 can be specified (described later). Alternatively, the positioning result may be distance information between the tag node 20 and the anchor node 10 calculated on the basis of the time difference information. In other words, the positioning result may be any information used to specify the position of the tag node 20. The positioning result is sent having associated a distance from a predetermined anchor node 10 to the tag node 20, an identifier of the predetermined anchor node 10, and an identifier of the tag node 20 with each other. In one example, position information of the anchor node 10 is transmitted along with the positioning result. Here, the base node may transmit the positioning result to a communication device outside the positioning system 1, e.g., a server in the cloud. For example, in the positioning processing, the first anchor node 10A estimates the distance from the first tag node 20A. Second to fourth anchor nodes 10B to 10D also estimate the distance from the first tag node 20A. The base node or an external device that receives the positioning result from the base node estimates the position of the tag node 20A on the basis of the estimated distances and the positions of the anchor nodes 10A to 10D. The method for estimating the position on the basis of the distance between the anchor node 10 and the tag node 20 can use publicly-known position estimation techniques that are based on distance, such as three- or four-point positioning, and will therefore not be described here.

In this manner, sharing the parameters used in the positioning processing using a communication method capable of synchronization makes it possible to increase the convenience of scheduling in the positioning processing while synchronizing the timings of the positioning slots.

Note that the tag node 20 does not communicate using the flooding method. As such, the first flooding slot 400 is not time-synchronized. The tag node 20 is in a sleep state in the first and second flooding slots 400 and 440, and transitions to an awake state, i.e., a state in which communication is possible through the wireless communication unit 303, in the positioning slot 420.

<First Positioning Processing>

FIG. 5 is a sequence chart illustrating signals transmitted/received in an example of the positioning processing performed by the positioning system 1 in a positioning slot according to a first embodiment.

The positioning processing illustrated in FIG. 5 is divided into four phases 500 to 530.

In the first phase 500, beacons are transmitted from the anchor nodes 10 in order (S501 to S503). As described above, each anchor node 10 specifies in advance at which number in order, among the plurality of anchor nodes 10, the transmission is to occur, i.e., time $k \times T_{p1}$, by sharing in the first flooding slot 400. Accordingly, when time $k \times T_{p1}$ is reached, a beacon is transmitted, and the transmission time of the beacon is stored.

The positioning parameters are shared in the first phase 500. The positioning parameters include information making it possible to specify the maximum number of anchor nodes 10 that transmit the beacon in the first and third phases ($N_A$), the maximum number of tag nodes 20 that transmit the beacon in the second phase ($N_T$), the beacon packet lengths ($T_{p1}$ to $T_{p3}$), and a reporting packet length ($T_{p4}$). The beacon packet also includes an identifier of the transmitting node. In one example, the beacon packet may include a sequence number of the positioning, a maximum entry number of the time difference information transmitted by the tag nodes 20 in a fourth phase (described later), and a current slot number. The first phase 500 may also include an order (k, l) in which each node transmits, among the anchor nodes or the tag nodes. If the positioning parameters k and l are not shared in the first phase 500, the positioning parameters k and l may be set statically so that no overlap is present, or may be set to a timing different from the positioning phase, e.g., when joining the positioning system 1.

Note that at least some of the positioning parameters may be shared before the first phase 500, i.e., before the positioning processing is executed. For example, the parameters may be shared in the positioning system 1 when a tag node 20 enters the communication range of the positioning system 1, every predetermined time period, or the like.

Note that in the first phase 500, each anchor node 10 remains in the sleep state until its own transmission timing. Here, the sleep state is a state in which power is not supplied to the first and second wireless communication units 203 and 204, but is supplied to the control unit 201, the storage unit 202, and the like. In one example, power may be supplied only to some processors in the control unit 201, and no power may be supplied to other processors. In other words, in the sleep state, the anchor node 10 supplies power only to components that can wake the first wireless communication unit 203 at the beacon transmission timing. In the sleep state, no power is supplied to the second clock for the positioning processing, but power is supplied to the first clock.

If the transmission timing of the anchor node 10 ($k \times T_{p1}$) is reached in the first phase 500, the anchor node 10 wakes up the first wireless communication unit 203, transmits the beacon (($k + 1) \times T_{p1}$), and then, in the first phase 500, transitions to an idle state. In the idle state, power is supplied to the second clock and the first clock for the positioning processing. Note that power continues to be supplied to the second clock while the time difference information is measured in the positioning processing. In one example, in the idle state, power can only be supplied to components that can wake the first wireless communication unit 203 at the beacon transmission timing, and to the second clock.

In the first phase 500, the tag nodes 20 stand by for reception of the beacon by the corresponding wireless communication unit 303 (S504 to S506). Upon receiving the beacon packet, the tag node 20 performs time synchronization using the result of detecting the received packet. In the time synchronization, the clock frequency, phase, and the like output from the clock 304 of the tag node 20 are adjusted on the basis of the carrier frequency of the packet. When a beacon packet from one of the anchor nodes 10 is detected, the reception time at which the beacon packet was received is stored. Alternatively, the tag node 20 may specify from which anchor node 10 the beacon packet was received on the basis of information on the transmission source included in the beacon packet. The example in FIG. 5 assumes that each tag node 20 receives a beacon packet from each anchor node 10. Using the measurement parameters included in the beacon packet, which number anchor node 10 the received packet was transmitted from (k) is determined, and the start time of the first phase 500 is specified by subtracting $k \times T_{p1}$ from the reception time. Additionally, the tag node 20 determines the start time of the second phase and the timing at which the beacon packet is transmitted in the second phase 510. In one example, tag nodes 20 not time-synchronized with the anchor node 10, e.g., when the power is turned on, perform intermittent reception asynchronously, and when the beacon packets transmitted in S501 to S503 are successfully received, the time synchronization may be performed on the basis of the received beacon packets, and the positioning processing may be executed. In this case, the tag node 20 can determine to execute the positioning processing on the basis of the received beacon packet. Note that the tag nodes 20 that receive the beacon packets transmitted in S501 to S503 during intermittent reception may perform only the time synchronization, and may join starting from the next positioning slot.

The tag nodes 20 execute standby processing until the transmission from all the anchor nodes 10 ends, i.e., until $N_A \times T_{p1}$ passes.

When the transmission from the anchor nodes 10 ends, the sequence moves to the second phase 510.

In the second phase 510, when the transmission timing of each tag node 20 itself reaches ($N_A \times T_{p1} + I \times T_{p2}$), the tag nodes 20 transmit the beacon packets (S511 to S513). As described above, on the basis of the positioning parameters received in the first phase 500, each tag node 20 specifies at which number to transmit, i.e., time $N_A \times T_{p1} + 1 \times T_{p2}$, in advance. When that time is reached, the wakeup is performed, the beacon packet is transmitted, and the transmission time is recorded.

The beacon packet transmitted from each tag node 20 includes the identifier of the tag node 20 that is the transmission source. In one example, the beacon packet may include a sequence number.

Note that in the second phase 510, each tag node 20 remains in the idle state until its own transmission timing. Like the idle state of the anchor node 10, the idle state here is a state in which power is not supplied to the wireless communication unit 303, but is supplied to the control unit 301, the storage unit 302, and the clock 304. In one example, power may be supplied only to some processors in the control unit 301, and no power may be supplied to other processors. In other words, in the idle state, the tag node 20 supplies power to components that can wake the wireless communication unit 303 at the beacon transmission timing, and the clock 304 for positioning.

In the second phase 510, each anchor node 10 stands by for a beacon packet (S514 to S516). Upon receiving the beacon packet, the anchor nodes 10 store the reception time. The anchor nodes 10 also specify which tag node 20 transmitted the beacon packet on the basis of the parameters included in the beacon packet.

The anchor nodes 10 execute standby processing until the transmission from all the tag nodes 20 ends, i.e., until $N_A \times T_{p1} + N_T \times T_{p2}$ passes.

The third phase 520 is the same as the first phase 500, and will therefore not be described. Note that the positioning parameters included in the beacon packets transmitted in S501 to S503 need not be included in the beacon packets transmitted in the third phase 520, and the identifiers of the transmission source may be included. In one example, each beacon packet transmitted in the first phase 500 may include information through which the association between the identifier of the anchor node 10 serving as a positioning parameter and the timing at which the beacon packet is transmitted from the anchor node 10 can be specified. In such a case, the tag node 20 can specify the transmitted identifier of the anchor node 10 on the basis of the timing at which the beacon packet is transmitted in the third phase 520. Accordingly, the identifier of the transmission source need not be included in the beacon packets transmitted in the third phase 520. The anchor nodes 10 that transmitted the beacon packets in the third phase 520 transition to the sleep state.

In the fourth phase 530, the tag nodes 20 transmit, to the anchor nodes 10 at a predetermined time $N_A \times T_{p1} + N_T \times T_{p2} + N_A \times T_{p3} + k \times T_I$, reporting packets including time difference information that makes it possible to specify the times from when the beacon packets were received in S504 to S506 to the time when the beacon packets were transmitted in S511 to S513, and the times from when the beacon packets were transmitted in S511 to S513 to the time when the beacon packets were received in S524 to S526. Each tag node 20 can determine from which anchor node 10 the beacon packet was received on the basis of the identifier of the transmission source included in the beacon packet in the first phase 500 and the third phase 520. Accordingly, each tag node 20 can specify the time from when the beacon packet is received to when the beacon packet is transmitted, and the time from when the beacon packet is transmitted to when the beacon packet is received, for each anchor node 10. Having the tag node 20 transmit the time difference information for each anchor node 10 therefore makes it possible to specify the distance to each tag node 20 on the anchor node 10 side. The specified distance is transmitted to the base node or the external device outside the flooding network in S537.

Note that in the present embodiment, in the fourth phase 530, each tag node 20 may associate the generated time difference information with the identifier of the anchor node 10 and transmit the generated time difference information through multicast or broadcast. In this case, each anchor node 10 obtains the time difference information associated with that node itself on the basis of the identifier of the anchor node 10 associated with the received time difference information. However, in one example, each tag node 20 may transmit the generated time difference information to the anchor node 10 that generated the time difference information through unicast.

In the fourth phase 530, each tag node 20 is in the sleep state until the predetermined time at which the time difference information is transmitted, and then transitions to the sleep state again after the time difference information is transmitted.

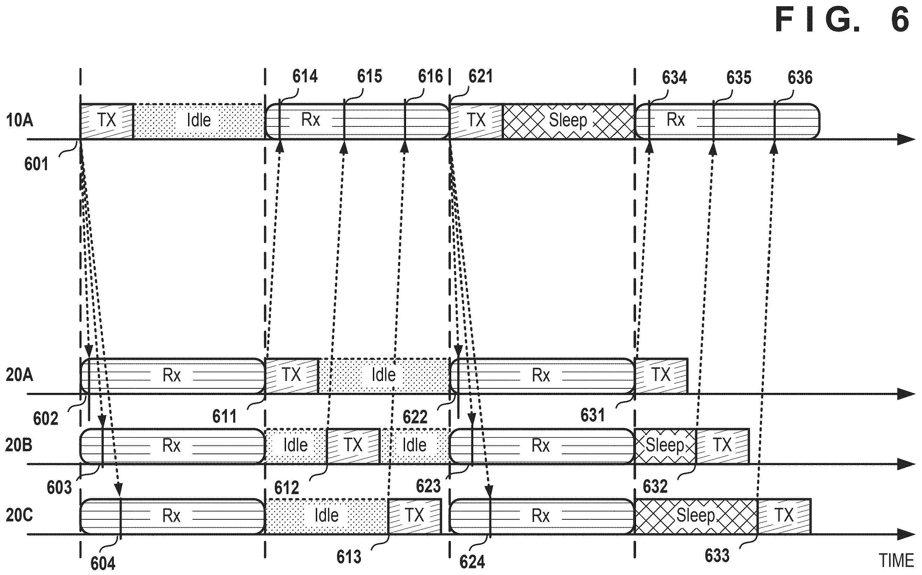

The time difference information generated between one anchor node 10 and three tag nodes 20 will be described here with reference to FIG. 6.

The anchor node 10 transmits the beacon packet at a transmission time 601 in the first phase 500 described with reference to FIG. 5, and stores the transmission time 601. The tag nodes 20A to 20C receive the beacon packet at reception times 602 to 604, respectively, and store the reception times 602 to 604. The beacon packets are transmitted at transmission times 611 to 613, respectively, in the second phase 510 described with reference to FIG. 5, and the transmission times 611 to 613 are stored. The anchor node 10 receives the beacon packets at reception times 614 to 616, respectively, and stores the reception times 614 to 616. The anchor node 10 transmits the beacon packet at time 621, and stores the transmission time 621. The tag nodes 20A to 20C receive the beacon packets at reception times 622 to 624, respectively, and store the reception times 622 to 624.

Here, the tag node 20A calculates a time $T_{1,t,1}$ from the reception time 602 to the transmission time 611 and a time $T_{1,t,2}$ from the transmission time 611 to the reception time 622, and reports this as the time difference information to the anchor node 10. Here, in $T_{id,type,seq}$, id indicates which tag node 20 the time difference information is associated with, type indicates which node the time difference information was calculated at (where a indicates an anchor node and t indicates a tag node), and seq indicates the time from the first phase to the second phase (seq = 1) or the time from the second phase to the third phase (seq = 2). Similarly, the tag nodes 20B and 20C generate time differences $T_{2,t,1}$, $T_{2,t,2}$, $T_{3,t,1}$, and $T_{3,t,2}$, and report these to the anchor node 10.

The anchor node 10 calculates a time $T_{1,a,1}$ from the transmission time 601 to the reception time 612 and a time $T_{1,a,2}$ from the reception time 612 to the transmission time 621, and generates the times $T_{1,a,1}$ and $T_{1,a,2}$ for the tag node 20A. Accordingly, the distance between the anchor node 10 and the tag node 20A can be calculated through the same calculation as in TWR on the basis of the times $T_{1,a,1}$, $T_{1,a,2}$, $T_{1,t,1}$, and $T_{1,t,2}$.

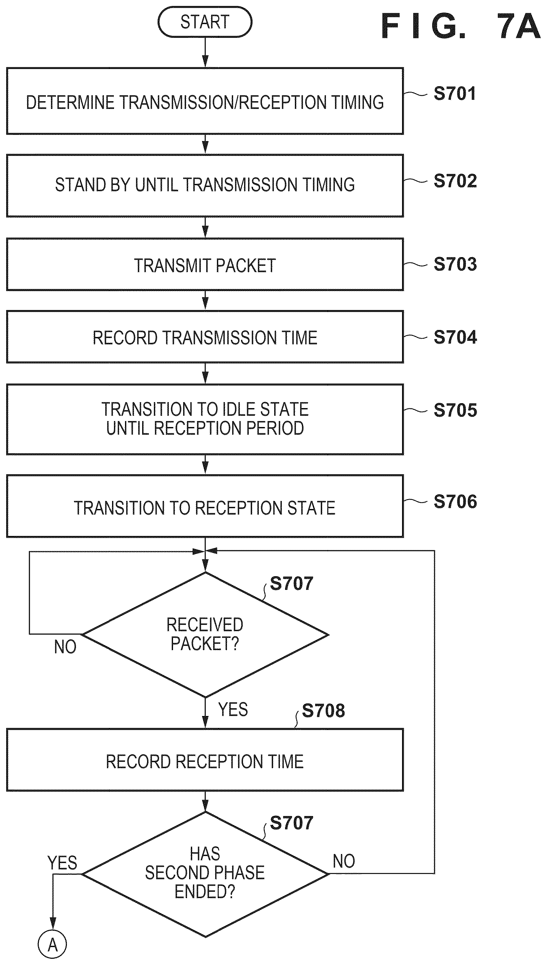

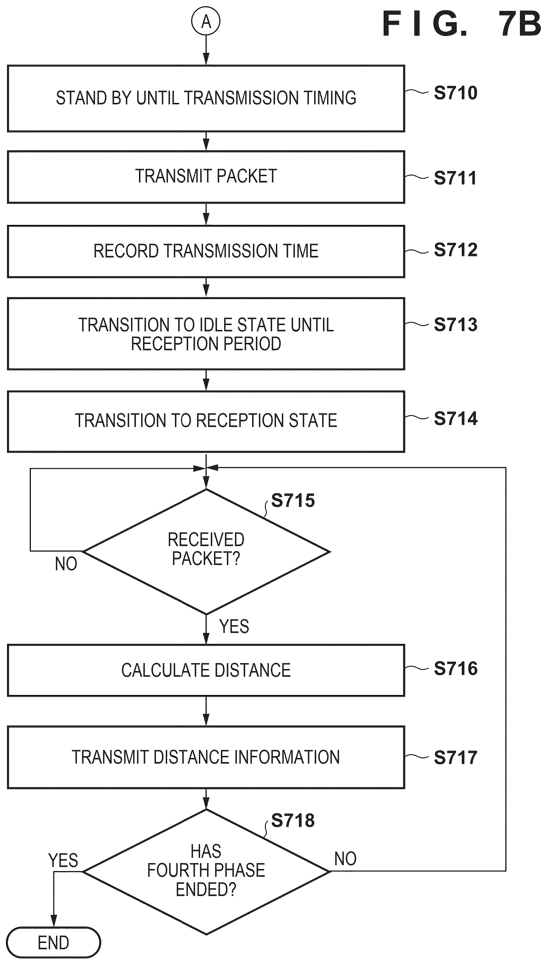

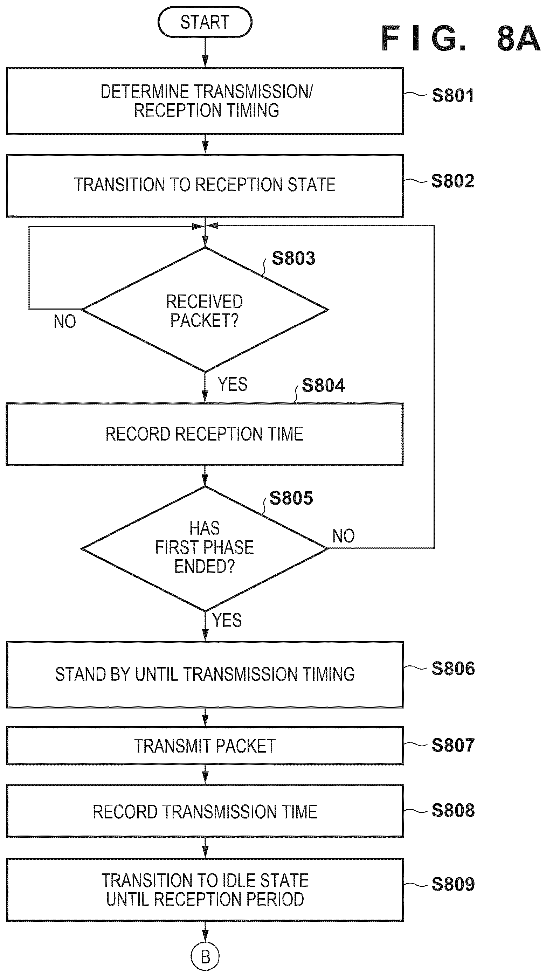

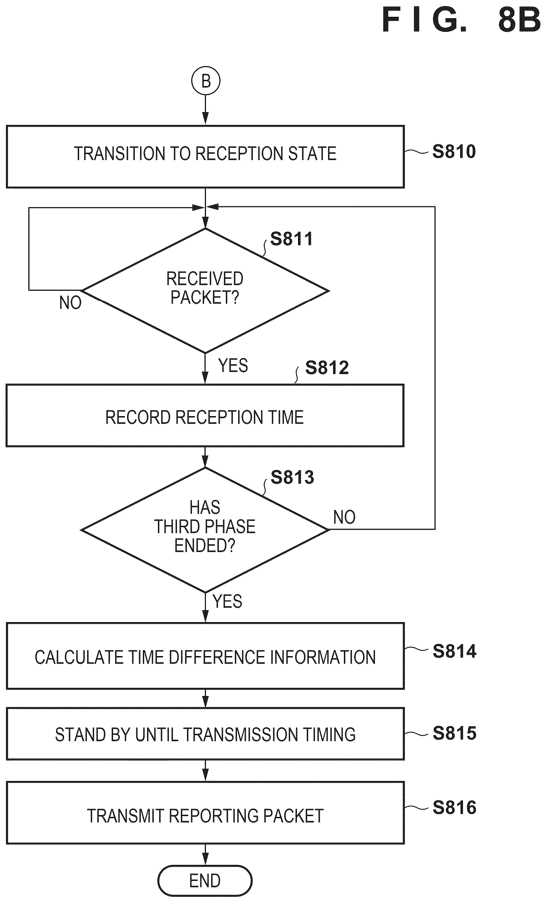

FIGS. 7A, 7B, 8A, and 8B illustrate positioning processing executed by the anchor node 10 and the tag node 20 according to the present embodiment. The processing illustrated in FIGS. 7A and 7B is realized by the processor of the control unit 201 of the anchor node 10 executing a program stored in a memory, and the processing illustrated in FIGS. 8A and 8B is realized by the processor of the control unit 301 of the tag node 20 executing a program stored in a memory. The processing illustrated in FIGS. 7A, 7B, 8A, and 8B is executed at the start of the positioning slot.

First, the anchor node 10 and the tag node 20 determine the timing of the first to fourth phases on the basis of the shared measurement parameters (S701, S801). In S701, the anchor node 10 also determines the timing at which the beacon packet is to be transmitted in the first and third phases. In S801, the tag node 20 also determines the timing at which the beacon packet or the reporting packet is to be transmitted in the second and fourth phases. In other words, in S701 and S801, the anchor node 10 and the tag node 20 determine the transmission and reception timings.

Next, the anchor node 10 transitions to the sleep state, and stands by until the transmission time of the beacon packet determined in S701 (S702). The tag node 20 transitions to a reception state (S802), and stands by for the beacon packet transmitted from the anchor node 10 (S803).

Next, the beacon packet is transmitted from the anchor node 10 to the tag node 20 (S703, YES in S803), the transmission time is recorded by the anchor node 10 (S704), and the reception time is recorded by the tag node 20 (S804). The anchor node 10 that has finished the transmission transitions to the idle state until the end of the first phase (S705). The tag node 20 repeats the processing of S803 and S804 until the end of the first phase. In S805, the tag node 20 may determine the end of the first phase on the basis of the packet length × the number of packets transmitted in the first phase ($T_{p1} \times N_A$), or on the basis of the final transmitted packet having been received.

In the second phase, the tag node 20 transitions to the idle state, and stands by until the transmission time of the beacon packet determined in S801 (S806). The anchor node 10 transitions to a reception state (S706), and stands by for the beacon packet transmitted from the tag node 20 (S707).

Next, the beacon packet is transmitted from the tag node 20 to the anchor node 10 (YES in S707, S807), the reception time is recorded by the anchor node 10 (S708), and the transmission time is recorded by the tag node 20 (S808). The tag node 20 that has finished the transmission transitions to the idle state until the end of the second phase (S809). The anchor node 10 repeats S707 and S708 until the second phase 510 ends (S709). In S709, the anchor node 10 may determine the end of the second phase on the basis of the packet length $\times$ the number of packets transmitted in the second phase ($T_{p2} \times N_T$), or on the basis of the final transmitted packet having been received.

In the third phase, the anchor node 10 transitions to the idle state, and stands by until the transmission time of the beacon packet determined in S701 (S710). The tag node 20 transitions to a reception state (S810), and stands by for the beacon packet transmitted from the anchor node 10 (S811).

Next, the beacon packet is transmitted from the anchor node 10 to the tag node 20 (S711, YES in S811), the transmission time is recorded by the anchor node 10 (S712), and the reception time is recorded by the tag node 20 (S812). The anchor node 10 that has finished the transmission transitions to the sleep state until the end of the third phase (S713). The tag node 20 repeats the processing of S811 and S812 until the end of the third phase (S813). In S813, the tag node 20 may determine the end of the third phase on the basis of the packet length $\times$ the number of packets transmitted in the third phase ($T_{p3} \times N_A$), or on the basis of the final transmitted packet having been received.

In the fourth phase, the tag node 20 calculates the time difference information (S814), transitions to the idle state, and stands by until the transmission time of the reporting packet determined in S801 (S815). The anchor node 10 transitions to a reception state (S714), and stands by for the beacon packet transmitted from the tag node 20 (S715).

Next, when the transmission timing of the tag node 20 is reached, the reporting packet is transmitted from the tag node 20 to the anchor node 10 (YES in S715, S816). The anchor node 10 calculates the distance between the tag node 20 and the anchor node 10 on the basis of the time difference information included in the reporting packet (S716), and transmits information indicating the distance between the anchor node 10 and the tag node 20 to a base node (not shown) in the positioning system 1, an information processing device outside the system (not shown), such as a server, or the like (S717). The anchor node 10 repeats the processing of S715 to S717 until the end of the fourth phase (S718). The tag node 20 then ends the processing illustrated in FIGS. 8A and 8B.

In S718, the anchor node 10 may determine the end of the fourth phase on the basis of the packet length $\times$ the number of packets transmitted in the fourth phase ($T_{p4} \times N_T$), or on the basis of the final transmitted packet having been received. If the anchor node 10 determines that the fourth phase has ended (YES in step S718), the processing illustrated in FIGS. 7A and 7B ends.

(Variation)

The present embodiment described the anchor node 10 and the tag node 20 as generating the time difference information when the beacon packet is received. However, in one example, the tag node 20 may determine whether to generate the time difference information on the basis of a received signal strength of the beacon packet received in the first or third phase. For example, the tag node 20 may determine not to generate the time difference information for the anchor node 10 if the received signal strength of the beacon packet received from the anchor node 10 is less than a predetermined value. This makes it unnecessary for a tag node having a large number of anchor nodes 10 in the periphery thereof to transmit/receive time difference information of beacon packets transmitted/received to/from the large number of anchor nodes 10, which makes it possible to reduce the packet size of the reporting packet or the number of reporting packets.

<Second Positioning Processing>

The present embodiment will describe an example in which the tag node selects an anchor node for positioning and performs the positioning with the selected anchor node through TWR. Note that descriptions of configurations, functions, and processing that are the same as in the first positioning processing will be omitted.

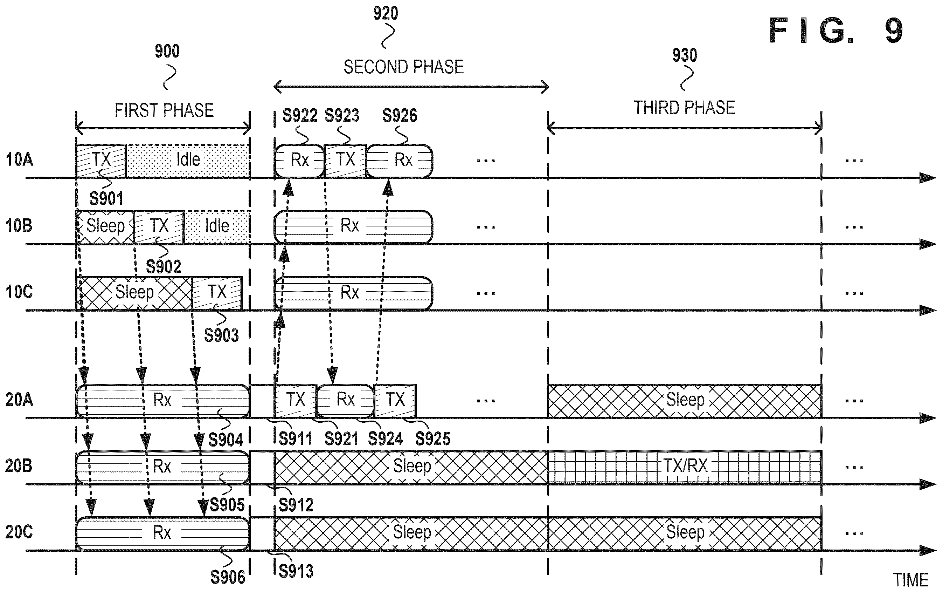

FIG. 9 illustrates a sequence chart of signals transmitted/received in the positioning system 1 according to the present embodiment.

In a first phase 900, beacons are transmitted from each anchor node 10 in order (S901 to S903). The tag nodes 20 receive the beacons from the anchor nodes 10 (S904 to S906). The first phase 900 is the same as the first phase 500 described with reference to FIG. 5, and will therefore not be described here.

Next, in S911 to S913, the tag nodes 20 select the anchor node 10 for which positioning is to be performed on the basis of the beacon packets received in S901 to S903. For example, the tag nodes 20 executes TWR as described with reference to FIG. 4 among a predetermined number of anchor nodes 10 in the order of the received signal strengths of the received beacon packets.

A second phase 920 that follows thereafter is provided for executing positioning processing between one tag node 20A and a plurality of anchor nodes 10. The anchor node 10 transitions to the reception state, and the tag nodes 20 other than the tag node 20A transition to the sleep state.

The tag node 20A transmits a packet notifying the anchor node 10 selected in S911 that the anchor node 10 has been selected as the partner node for positioning (S921). The packet transmitted in S921 includes the identifier of the tag node 20A that is the transmission source and the identifier of the anchor node 10A that is the destination. The anchor node 10A selected as the partner node for the positioning performs positioning through TWR as illustrated in FIG. 4 (TWR positioning) with the tag node 20A on the basis of the received packets (S923 to S926), and estimates the distance between the anchor node 10A and the tag node 20A on the basis of the time difference information received from the tag node 20A.

The tag node 20A executes TWR with the plurality of anchor nodes 10 selected in S911, after which the second phase ends. In one example, the maximum value of the number of anchor nodes 10 selected as the partner nodes for performing the positioning is included in the beacon packets transmitted in S901 to S903 as part of the positioning parameters.

In a third phase 930 that follows thereafter, the tag node 20B, which is different from the tag node 20A, executes TWR with one or more anchor nodes 10 selected in S912. Although not illustrated in FIG. 9, even after the third phase, the TWR may be executed with one or more anchor nodes 10 selected by a tag node 20 different from the tag nodes 20A and 20B.

As described above, upon receiving signals from a plurality of anchor nodes 10, the tag node 20 selects an anchor node 10 for positioning on the basis of the received signals, and executes the positioning processing with the anchor node 10. This makes it possible to extend the time for which the tag node 20 is in a low power consumption state, which in turn makes it possible to reduce the amount of power consumed by the tag node 20.

Note that in the example in FIG. 9, the anchor node 10A measures (1) the time from when the anchor node 10A receives the beacon packet in S922 to when the beacon packet is received in S923, and (2) the time from when the anchor node 10A transmits the beacon packet in S923 to when the packet is received in S926. In addition, the distance is estimated on the basis of (3) the time from when the tag node 20A transmits the beacon packet in S921 to when the packet is received from the anchor node 10A in S924, and (5) the time from when the tag node 20A receives the beacon packet in S924 to when the packet is transmitted in S925. As such, the packet transmitted in S925 includes information through which (2) the time from when the anchor node 10A receives the beacon packet in S922 to when the beacon packet is received in S923, and (4) the time from when the anchor node 10A transmits the beacon packet in S923 to when the packet is received in S926, can be specified.

(First Variation)

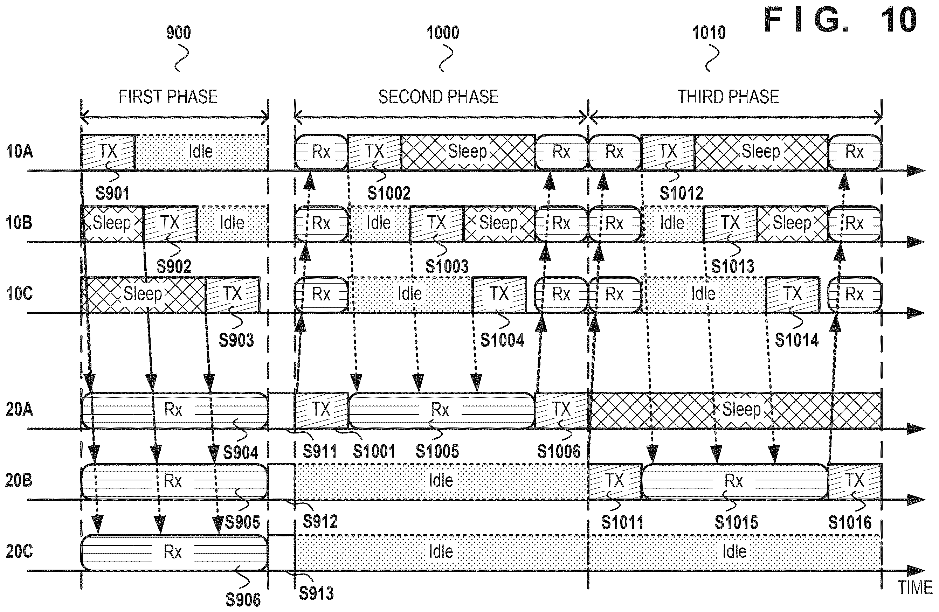

The example in FIG. 9 illustrates the tag node 20 as executing DS-TWR (Double Sided Two-Way Ranging), which is one-to-one TWR with the anchor node 10 selected as the partner node for positioning. However, as illustrated in FIG. 10, one-to-many positioning may be performed between one tag node 20A and a plurality of anchor nodes 10.

In the sequence chart illustrated in FIG. 10, in a second phase 1000 in which the positioning of the tag node 20A is performed, a beacon packet is transmitted from the tag node 20A through broadcast or multicast, and in the subsequent S1002 to S1005, the anchor nodes 10A to 10C transmit beacon packets at timings corresponding to the identifier, as in the third phase 520 described with reference to FIG. 5.

(Second Variation)

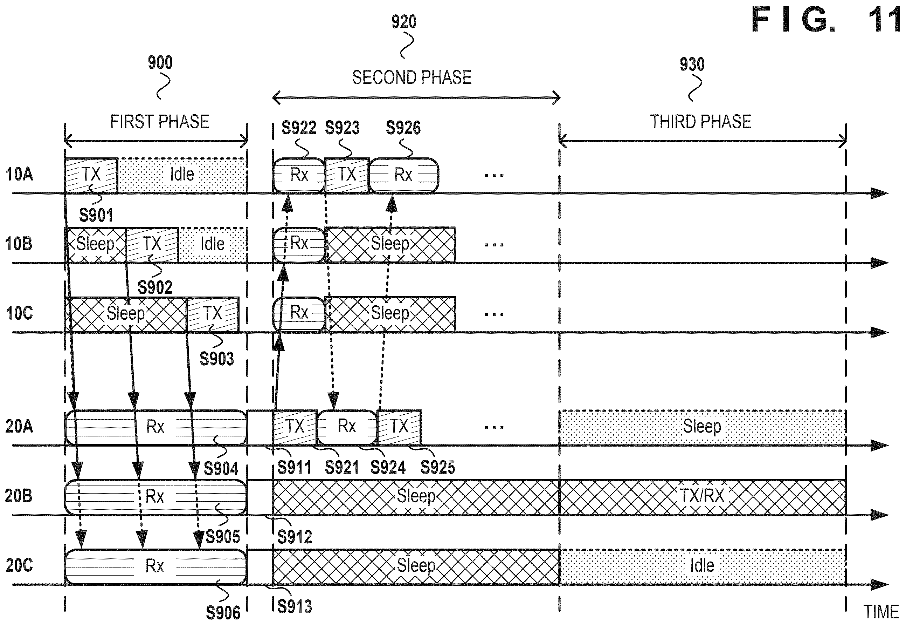

Although the example in FIG. 9 illustrates all the anchor nodes 10 as being in the reception state, the anchor nodes 10 that are not selected as the partner node for positioning in S921 may transition to the sleep state until the second phase ends, as illustrated in FIG. 11. In this case, the signal transmitted in S921 includes an identifier of the anchor node 10, indicating one or more anchor nodes 10 selected as the partner node for positioning.

<Third Positioning Processing>

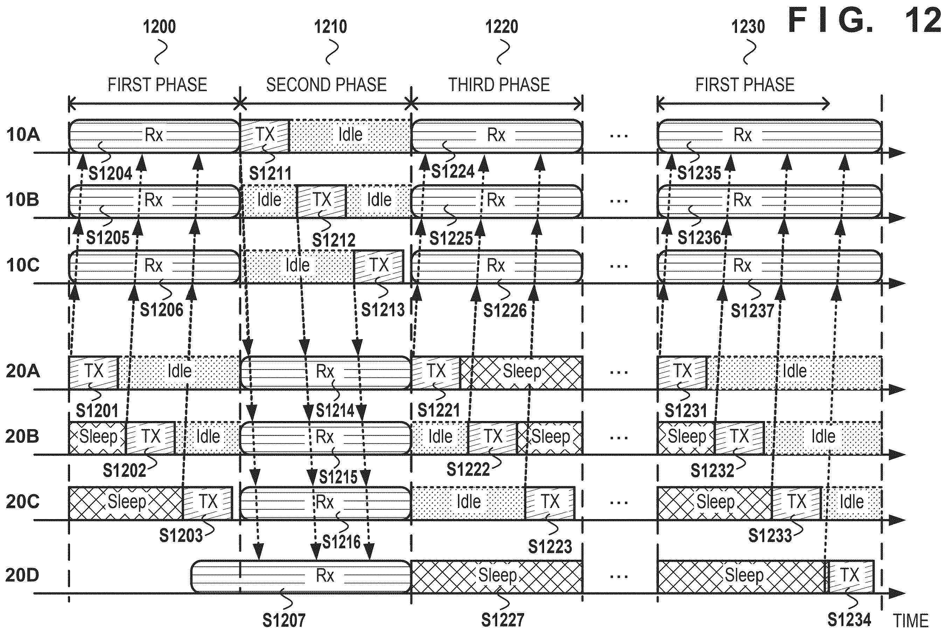

An example in which the tag node 20 transmits in the first phase will be described as the present processing example, with reference to FIG. 12.

The example in FIG. 12 assumes that a tag node 20D which is not time synchronized and does not have information about the positioning parameters is present in the positioning system 1, and that the anchor node 10 shares that the tag node 20D is present through flooding communication. For example, a tag node 20 that has not executed the positioning processing for a predetermined length of time can transmit a probe signal among a plurality of positioning slots, and any anchor node 10 that receives the probe signal can then notify the base node of the presence of the new tag node 20. In this case, the base node can share information indicating that the new tag node 20 is present among the anchor nodes 10 through flooding communication.

In a first phase 1200 illustrated in FIG. 12, the tag nodes 20A to 20C transmit beacon packets according to the positioning schedule (S1201 to S1203). The anchor node 10 stands by for the beacon packet according to the positioning schedule (S1204 to S1206). Here, the tag node 20D, which does not have the information about the positioning parameters, performs intermittent reception in which the reception timing is included in a second phase 1210 (S1207).

In the second phase 1210, the anchor nodes 10A to 10C transmit beacon packets according to the schedule (S1211 to S1213). Here, the beacon packets transmitted in S1211 to S1213 include information making it possible to specify the maximum number of anchor nodes 10 that transmit in the second phase ($N_A$), the maximum number of tag nodes 20 that transmit in the first and third phases ($N_T$), the beacon packet length, and the reporting packet length. The beacon packet may also include an identifier of the transmitting node. The beacon packets transmitted in S1211 to S1213 may also include an order (k,l) for transmitting among the anchor nodes or the tag nodes. In one example, the beacon packet may include a sequence number of the positioning, a maximum entry number of the time difference information transmitted by the tag node 20 in a third phase (described later), and a current slot number. The tag node 20D can perform time synchronization with the anchor node 10 by receiving the beacon packet transmitted in the second phase in S1207, and the positioning schedule can be determined. The tag nodes 20A to 20C also perform subsequent operations on the basis of the synchronization information of the received beacon packets.

Note that the anchor node 10 recognizes that the tag node 20D has joined the positioning system 1 through communication using the flooding method. The tag nodes 20A to 20C can also recognize that the tag node 20D has joined the positioning system 1 through the packets received in the second phase 1210.

In a third phase 1220, the reporting packet is transmitted from the tag node 20 to the anchor node 10 (S1221 to S1223). The reporting packets transmitted in S1221 to S1223 include information through which the time from when the beacon packet is transmitted in the first phase 1200 to when the beacon packet is received in the second phase 1210, and the length of time from when the beacon packet is received in the second phase 1210 to when the reporting packet is transmitted in the third phase 1220, can be specified.

This makes it possible to estimate the distance based on TWR with one transmission from the anchor node 10 and two transmissions from the tag node 20. When the positioning processing ends, the anchor node 10 executes the same processing as in S537 of FIG. 5, for reporting the distance from the tag node 20 to the base node or an external device. Because the tag node 20D also obtains the positioning parameters in the second phase 1210, the beacon packet is transmitted from the tag nodes 20 including the tag node 20D in a first phase 1230 of the positioning processing to be performed thereafter (S1231 to S1234). The subsequent processing is the same as in the second phase 1210 and the third phase 1220, and will therefore not be described here.

When receiving the packet, it is necessary for the tag node 20 to stand by for the packet for a predetermined period of time in which the packet can arrive, and thus the power consumed by the reception of the packet may be higher than the transmission of the packet. Accordingly, the time for which the tag node 20 stands by for the packet can be shortened, which reduces the amount of power consumed by the tag node 20. Additionally, the number of packets to be transmitted/received can be reduced compared to the first to fourth phases illustrated in FIG. 5, which makes it possible to shorten the time required to complete the positioning processing.

<Other Embodiments>

The invention is not limited to the foregoing embodiments, and various variations/changes are possible within the spirit of the invention.

The embodiment described the positioning system 1 as performing the positioning of the tag node 20 through ToF. However, the positioning of the tag node 20 may be executed through another positioning method. For example, the positioning system 1 may execute the positioning through Angle of Arrival (AoA).

In such a case, in a first phase 1400 of the positioning slot, the anchor nodes 10 transmit first signals specifying the timings at which the tag nodes 20 transmit the wireless signals (S1401 to S1403), and the tag nodes 20 specify the timings at which the wireless signals are transmitted by receiving the first signals (S1404 to S1406).

In a second phase 1410 after the first phase 1400, the tag nodes 20 transmit wireless signals for measurement at a predetermined timing on the basis of the first signals received in the first phase 1400 (S1411 to S1413). Each anchor node 10 includes a second wireless communication unit 204 capable of identifying the phase difference of the wireless signals received from a plurality of antennas, and specifies the directions or positions of the tag nodes 20 that transmitted the wireless signals at the predetermined timing on the basis of the arrival phase difference of the wireless signals transmitted in S1411 to S1413 (S1414 to S1416). In one example, the position of a tag node 20 in the positioning system 1 can be specified by specifying the direction from the plurality of anchor nodes 10 to the tag node 20, and combining the positions of the plurality of anchor nodes 10 with the direction from the respective anchor nodes 10 to the predetermined tag node 20. The method for specifying the direction or position of the tag nodes 20 can apply a publicly-known AoA method for positioning processing, and will therefore not be described.

The embodiment described the time difference from the timing T1 at which the beacon packet was transmitted to the timing T4 at which the packet was received, and the time difference from the timing T4 to the timing T5 at which the reporting packet was transmitted, as being transmitted in the reporting packets transmitted in S531 to S533 of FIG. 5, 631 to 633 of FIG. 6, S816 of FIG. 8B, S925 of FIG. 9, S1006 and S1016 of FIG. 10, S925 of FIG. 11, and S1221 to S1223 of FIG. 12, as described with reference to $T_{a1}$ and $T_{a2}$ in FIG. 13 serving as the time difference information. However, when the anchor node 10 and the tag node 20 in the positioning system 1 are synchronized at the order of microseconds, and the transmission time of the packet is included in the packet received at the timing T4, the tag node 20 may calculate a time difference T4 - T3 and include that time difference in the reporting packet. In such a case, it is not necessary to include two time differences in the reporting packet, and the anchor node 10 can specify a timestamp on the tag node 20 side, such as the timing T1 at which the tag node 20 transmitted the beacon packet and the timing T5 at which the reporting packet was transmitted, by subtracting the time difference T4 - T3 from the timing at which the anchor node 10 itself received the beacon packet and the timing at which the anchor node 10 received the reporting packet. This makes it possible to reduce the data size of the time difference information included in the reporting packet.

In addition, although transmission to a base node or an external device outside the flooding network was described as being performed in S537 of FIG. 5, the anchor node 10 may transmit the distance between the anchor node 10 and the tag node 20 to the external device through the first wireless communication unit. Alternatively, the distance between the anchor node 10 and the tag node 20 may be transmitted to the tag node 20 or the external device outside the positioning system 1 through the second wireless communication unit. Additionally, the embodiment described the positioning system 1 as executing the positioning of the tag node 20. However, only one anchor node 10 may be provided, in which case the system 1 may only perform rangefinding. Additionally, the anchor node 10 (or the tag node 20) may include a plurality of antennas, the angle of arrival of electromagnetic waves arriving from the tag node 20 (or the anchor node 10) may be estimated through a publicly-known technique such as AoA (Angle of Arrival), and the positioning may be executed using a combination of the distance between the anchor node 10 and the tag node 20 and the angle of arrival. In such a case, the positioning system 1 may include only one anchor node 10.

REFERENCE SIGNS LIST

 1: Positioning system
 10: Anchor node
 20: Tag node

**Claims**

1. A positioning system comprising one or more anchor nodes and one or more tag nodes,

 wherein the one or more anchor nodes are configured to:

  perform time synchronization among the one or more anchor nodes through first communication different from single-hop communication, and share parameters to be used in positioning processing of the tag nodes;
  transmit the parameters to the one or more tag nodes through single-hop communication; and
  execute positioning or rangefinding for the one or more tag nodes based on the parameters in a positioning slot in which the positioning processing is executed, and

 the one or more tag nodes are configured to:

  perform time synchronization with the one or more anchor nodes through the single-hop communication, and receive the parameters from at least one of the one or more anchor nodes; and
  execute wireless positioning processing using the single-hop communication with the at least one of the one or more anchor nodes based on the parameters in the positioning slot.

2. The positioning system according to claim 1,

 wherein the positioning system is a positioning system that performs positioning or rangefinding using a Time of Flight (ToF) method,
 the one or more tag nodes are further configured to:

  stand by for a first wireless signal transmitted from each of the one or more anchor nodes, in a first period within the positioning slot;
  transmit a second wireless signal at a predetermined timing in a second period that is within the positioning slot and is after the first period; and
  stand by for a third wireless signal transmitted from each of the one or more anchor nodes, in a third period that is within the positioning slot and is after the second period,

 the one or more anchor nodes are each further configured to:

  transmit the first wireless signal at a timing associated with the anchor node, in the first period;
  stand by for the second wireless signal transmitted by each of the one or more tag nodes, in the second period; and
  transmit the third wireless signal at a timing associated with the anchor node, in the third period, and

the positioning system further comprises estimation means for estimating a distance between a predetermined tag node among the one or more tag nodes and a predetermined anchor node among the one or more anchor nodes based on:

a first time from when the predetermined anchor node transmits the first wireless signal to when the predetermined anchor node receives the second wireless signal from the predetermined tag node;
a second time from when the predetermined anchor node receives the second wireless signal from the predetermined tag node to when the predetermined anchor node transmits the third wireless signal;
a third time from when the predetermined tag node receives the first wireless signal from the predetermined anchor node to when the predetermined tag node transmits the second wireless signal; and
a fourth time from when the predetermined tag node transmits the second wireless signal to when the predetermined anchor node receives the third wireless signal.

3. The positioning system according to claim 2, wherein the predetermined tag node transmits a reporting packet including information indicating the third time and the fourth time to the predetermined anchor node in a fourth period that is after the third period.

4. The positioning system according to claim 3, wherein the one or more tag nodes select an anchor node to which the reporting packet is to be transmitted based on a received signal strength of the first wireless signal and a received signal strength of the third wireless signal.

5. The positioning system according to any one of claims 2 to 4, wherein in the first period, the one or more anchor nodes each transmit the first wireless signal at a timing corresponding to an identifier of the anchor node.

6. The positioning system according to any one of claims 2 to 5,

wherein the first wireless signal includes an identifier of the anchor node that transmitted the first wireless signal, and
each of the one or more tag nodes stores the identifier in association with a reception time of the first wireless signal that was detected.

7. The positioning system according to any one of claims 2 to 6, wherein in the second period, the one or more tag nodes each transmit the second wireless signal at a timing corresponding to an identifier of the tag node.

8. The positioning system according to any one of claims 2 to 7,

wherein the second wireless signal includes an identifier of the tag node that transmitted the second wireless signal, and
each of the one or more anchor nodes stores the identifier in association with a reception time of the second wireless signal that was detected.

9. The positioning system according to any one of claims 2 to 8, wherein in the third period, the one or more anchor nodes each transmit the third wireless signal at a timing corresponding to an identifier of the anchor node.

10. The positioning system according to any one of claims 2 to 9,

wherein the third wireless signal includes an identifier of the anchor node that transmitted the third wireless signal, and
each of the one or more tag nodes stores the identifier in association with a reception time of the third wireless signal that was detected.

11. The positioning system according to any one of claims 2 to 10,

wherein the one or more anchor nodes transmit the first wireless signal including the parameters, the parameters including a total number of the one or more anchor nodes, a total number of the one or more tag nodes, and a length of time of each of the first wireless signal, the second wireless signal, and the third wireless signal, and
the one or more tag nodes perform time synchronization based on the first wireless signal, and determine a length of time of each of the first period, the second period, and the third period based on the parameters.

12. The positioning system according to claim 10,

wherein the one or more anchor nodes each include a first wireless communication unit and a second wireless communication unit, the one or more anchor nodes transmit and receive the first wireless signal, the second wireless signal, and the third wireless signal through the first wireless communication unit, and the one or more anchor nodes transmit and receive a fourth wireless signal for sharing the parameters among the one or more anchor nodes through the second wireless communication unit.

13. The positioning system according to claim 12,

wherein the first wireless communication unit performs communication compliant with an ultra-wideband wireless communication standard, and the second wireless communication unit communicates using a flooding method.

14. The positioning system according to any one of claims 2 to 13, wherein the estimation means transmits the distance estimated between the predetermined anchor node and the predetermined tag node to an external device different from the one or more anchor nodes and the one or more tag nodes.

15. The positioning system according to any one of claims 2 to 14, wherein the one or more tag nodes perform time synchronization based on the first wireless signal.

16. The positioning system according to any one of claims 2 to 15, wherein the predetermined anchor node includes the estimation means.

17. The positioning system according to any one of claims 2 to 16, wherein the parameters include:

a total number of the one or more anchor nodes that transmit the first wireless signal in the first period; a total number of the one or more tag nodes that transmit the second wireless signal in the second period; a packet length of the first wireless signal; and a packet length of the second wireless signal.

18. The positioning system according to any one of claims 2 to 17, wherein the parameters include:

information enabling specifying an order of the one or more anchor nodes that transmit the first wireless signal in the first period; and information enabling specifying an order of the one or more tag nodes that transmit the second wireless signal in the second period.

19. The positioning system according to any one of claims 1 to 18,

wherein the positioning system is a positioning system that performs positioning or rangefinding using a Time of Flight (ToF) method, the one or more tag nodes are further configured to:

stand by for a first wireless signal transmitted from each of the one or more anchor nodes, in a first period within the positioning slot; select, based on a result of detecting the first wireless signal, at least one of the one or more anchor nodes as a partner node with which positioning processing is to be executed; and execute wireless positioning processing according to the ToF method with the selected anchor node, after the first period within the positioning slot, and

the one or more anchor nodes are configured to:

transmit the first wireless signal at a timing associated with the anchor node, in the first period; and execute wireless positioning processing with the one or more tag nodes in a second period that is after the first period.

20. The positioning system according to claim 19, wherein Two-Way Ranging for estimating a distance between any one of the one or more tag nodes and any one of the one or more anchor nodes is executed in the positioning processing.

21. The positioning system according to claim 19,

wherein in a third period that is after the first period and before the second period within the positioning slot, the one or more tag nodes transmit a second wireless signal including an identifier of the selected anchor node, and each of the one or more anchor nodes transitions to an idle state in the second period in a case where an identifier of the anchor node does not match an identifier included in the second wireless signal received from the one or more tag nodes in the third period.

22. The positioning system according to any one of claims 19 to 21, wherein the first wireless signal includes information indicating a position of an anchor node that is a transmission source of the first wireless signal.

23. The positioning system according to any one of claims 19 to 22,

    wherein the one or more anchor nodes transmit the first wireless signal including the parameters, the parameters including a total number of the one or more anchor nodes, a total number of the one or more tag nodes, and a length of time of the first wireless signal, and
    the one or more tag nodes perform time synchronization based on the first wireless signal, and determine a length of time of the first period based on the parameters.

24. The positioning system according to claim 23,

    wherein the one or more anchor nodes each include a first wireless communication unit and a second wireless communication unit,
    the one or more anchor nodes transmit the first wireless signal through the first wireless communication unit, and
    the one or more anchor nodes transmit and receive a third wireless signal for sharing the parameters among the one or more anchor nodes through the second wireless communication unit.

25. The positioning system according to claim 24,

    wherein the first wireless communication unit performs communication compliant with an ultra-wideband wireless communication standard, and
    the second wireless communication unit communicates using a flooding method.

26. The positioning system according to any one of claims 1 to 18,

    wherein the positioning system is a positioning system that performs positioning or rangefinding through a Time of Flight (ToF) method,
    the one or more tag nodes are further configured to:

        transmit a first wireless signal at a predetermined timing in a first period within the positioning slot;
        stand by for a second wireless signal transmitted from each of the one or more anchor nodes, in a second period that is within the positioning slot and is after the first period; and
        transmit a third wireless signal at a predetermined timing in a third period that is within the positioning slot and is after the second period,

the one or more anchor nodes are each further configured to:

        stand by for the first wireless signal transmitted by each of the one or more tag nodes, in the first period;
        transmit the second wireless signal at a timing associated with the anchor node, in the second period; and
        stand by for the third wireless signal transmitted by each of the one or more tag nodes, in the third period, and

the positioning system further comprises estimation means for estimating a distance between a predetermined tag node among the one or more tag nodes and a predetermined anchor node among the one or more anchor nodes based on:

        a first time from when the predetermined tag node transmits the first wireless signal to when the predetermined anchor node receives the second wireless signal;
        a second time from when the predetermined tag node receives the second wireless signal from the predetermined anchor node to when the predetermined tag node transmits the third wireless signal;
        a third time from when the predetermined anchor node receives the first wireless signal from the predetermined tag node to when the predetermined anchor node transmits the second wireless signal; and
        a fourth time from when the predetermined anchor node transmits the second wireless signal to when the predetermined anchor node receives the third wireless signal.

27. The positioning system according to claim 26,

    wherein the one or more anchor nodes transmit the second wireless signal including the parameters, the parameters including a total number of the one or more anchor nodes, a total number of the one or more tag nodes, and a length of time of each of the first wireless signal, the second wireless signal, and the third wireless signal, and
    the one or more tag nodes perform time synchronization based on the second wireless signal, and determine a length of time of each of the first period, the second period, and the third period based on the parameters.

**28.** The positioning system according to any one of claims 1 to 18,

wherein the positioning system is a positioning system that performs positioning or rangefinding using an Angle of Arrival (AoA) method, the one or more tag nodes are further configured to:

stand by for a first wireless signal transmitted from each of the one or more anchor nodes, in a first period within the positioning slot; and

transmit a second wireless signal at a predetermined timing in a second period that is within the positioning slot and is after the first period,

the one or more anchor nodes each further include a plurality of antennas, and are configured to:

transmit the first wireless signal at a timing associated with the anchor node, in the first period; and

stand by for the second wireless signal transmitted by each of the one or more tag nodes, in the second period, and

the positioning system further comprises estimation means for estimating a direction or a position of the one or more tag nodes based on a difference between arrival times of the second wireless signal at the plurality of antennas.

# F I G. 1

ANCHOR NODE 10A

TAG NODE 20B

ANCHOR NODE 10C

TAG NODE

TAG NODE 20A

TAG NODE 20C

ANCHOR NODE 10B

1

# F I G. 2

10

CONTROL UNIT — 201

STORAGE UNIT — 202

FIRST WIRELESS COMMUNICATION UNIT — 203

SECOND WIRELESS COMMUNICATION UNIT — 204

CLOCK — 205

BATTERY — 206

207

# F I G. 3

20

CONTROL UNIT — 301

STORAGE UNIT — 302

WIRELESS COMMUNICATION UNIT — 303

CLOCK — 304

BATTERY — 305

306

F I G . 4

FIG. 5

F I G. 6

# FIG. 7A

START

DETERMINE TRANSMISSION/RECEPTION TIMING — S701

STAND BY UNTIL TRANSMISSION TIMING — S702

TRANSMIT PACKET — S703

RECORD TRANSMISSION TIME — S704

TRANSITION TO IDLE STATE
UNTIL RECEPTION PERIOD — S705

TRANSITION TO RECEPTION STATE — S706

S707

RECEIVED
PACKET?

NO

YES  S708

RECORD RECEPTION TIME

S707

HAS
SECOND PHASE
ENDED?

YES    NO

A

23

Ⓐ

# FIG. 7B

STAND BY UNTIL TRANSMISSION TIMING — S710

TRANSMIT PACKET — S711

RECORD TRANSMISSION TIME — S712

TRANSITION TO IDLE STATE UNTIL RECEPTION PERIOD — S713

TRANSITION TO RECEPTION STATE — S714

S715
RECEIVED PACKET?
NO
YES

CALCULATE DISTANCE — S716

TRANSMIT DISTANCE INFORMATION — S717

S718
HAS FOURTH PHASE ENDED?
YES
NO

END

# FIG. 8A

```
              ( START )

   ┌──────────────────────────────┐
   │  DETERMINE TRANSMISSION/      │── S801
   │  RECEPTION TIMING             │
   └──────────────────────────────┘
                  │
   ┌──────────────────────────────┐
   │  TRANSITION TO RECEPTION STATE│── S802
   └──────────────────────────────┘
                  │
             ╱──────────╲          S803
      NO    ╱  RECEIVED   ╲
    ◄──────◄    PACKET?    ►
            ╲             ╱
             ╲──────────╱
                  │ YES              S804
   ┌──────────────────────────────┐
   │  RECORD RECEPTION TIME        │
   └──────────────────────────────┘
                  │
             ╱──────────╲          S805
            ╱    HAS      ╲   NO
           ◄ FIRST PHASE   ►──────►
            ╲   ENDED?    ╱
             ╲──────────╱
                  │ YES
   ┌──────────────────────────────┐
   │ STAND BY UNTIL TRANSMISSION   │── S806
   │ TIMING                        │
   └──────────────────────────────┘
                  │
   ┌──────────────────────────────┐
   │  TRANSMIT PACKET              │── S807
   └──────────────────────────────┘
                  │
   ┌──────────────────────────────┐
   │  RECORD TRANSMISSION TIME     │── S808
   └──────────────────────────────┘
                  │
   ┌──────────────────────────────┐
   │ TRANSITION TO IDLE STATE      │── S809
   │ UNTIL RECEPTION PERIOD        │
   └──────────────────────────────┘
                  │
                ( B )
```

# F I G. 8B

B

TRANSITION TO RECEPTION STATE — S810

RECEIVED PACKET? S811 — NO

YES S812

RECORD RECEPTION TIME

HAS THIRD PHASE ENDED? S813 — NO

YES

CALCULATE TIME DIFFERENCE INFORMATION — S814

STAND BY UNTIL TRANSMISSION TIMING — S815

TRANSMIT REPORTING PACKET — S816

END

FIG. 9

F I G. 10

# F I G. 11

FIRST PHASE — 900
SECOND PHASE — 920
THIRD PHASE — 930

TIME

10A, 10B, 10C, 20A, 20B, 20C

S901, S902, S903, S904, S905, S906
S911, S912, S913
S921, S922, S923, S924, S925, S926

TX, Sleep, Idle, Rx, TX/RX

F I G. 12

F I G. 13

# FIG. 14

# EP 4 715 418 A1

## INTERNATIONAL SEARCH REPORT

| International application No. |
|---|
| **PCT/JP2024/018408** |

### A. CLASSIFICATION OF SUBJECT MATTER

*G01S 5/14*(2006.01)i; *G01S 5/04*(2006.01)i
FI:   G01S5/14; G01S5/04

According to International Patent Classification (IPC) or to both national classification and IPC

### B. FIELDS SEARCHED

Minimum documentation searched (classification system followed by classification symbols)

G01S5/00-5/14; G01S19/00-19/55;

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2017/0126273 A1 (INDUSTRIAL BANK OF KOREA) 04 May 2017 (2017-05-04) paragraphs [0033]-[0036], [0038]-[0041], fig. 1-2 | 1 |
| A | US 2023/0030936 A1 (SPEARIX TECHNOLOGIES, INC.) 02 February 2023 (2023-02-02) entire text, all drawings | 1-28 |
| A | US 5912644 A (WANG, James J. M.) 15 June 1999 (1999-06-15) entire text, all drawings | 1-28 |
| A | JP 2012-501112 A (QUALCOMM INCORPORATED) 12 January 2012 (2012-01-12) entire text, all drawings | 1-28 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 June 2024** | **02 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

EP 4 715 418 A1

| INTERNATIONAL SEARCH REPORT | International application No. |
| Information on patent family members | PCT/JP2024/018408 |

| Patent document cited in search report | | | Publication date (day/month/year) | Patent family member(s) | | | Publication date (day/month/year) |
|---|---|---|---|---|---|---|---|
| US | 2017/0126273 | A1 | 04 May 2017 | (Family: none) | | | |
| US | 2023/0030936 | A1 | 02 February 2023 | WO | 2023/009855 | A2 | |
| US | 5912644 | A | 15 June 1999 | (Family: none) | | | |
| JP | 2012-501112 | A | 12 January 2012 | WO | 2010/022371 | A2 | |

**EP 4 715 418 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MILAD HEYDARIAAN** ; **HOSSEIN DABIRIAN** ; **OMPRAKASH GNAWALI**. AnguLoc: Concurrent Angle of Arrival Estimation for Indoor Localization with UWB Radios. *International Conference on Distributed Computing in Sensor Systems*, 2020